# EUROPÄISCHE PATENTSCHRIFT

(11) **EP 1 955 932 B1**
(45) Veröffentlichungstag und Bekanntmachung des Hinweises auf die Patenterteilung: **22.06.2016**
(21) Anmeldenummer: 08002090.2
(22) Anmeldetag: 05.02.2008
(51) Int. Cl.: B62D 33/02, B62D 33/037

(54) **Schließanordnung für einen Fahrzeugaufbau**
Locking mechanism for a vehicle superstructure
Mécanisme de fermeture pour une structure de véhicule

(30) Priorität: 08.02.2007 DE 102007007064
(43) Veröffentlichungstag der Anmeldung: 13.08.2008
(73) Patentinhaber: F. HESTERBERG & SÖHNE GmbH & Co. KG, 58256 Ennepetal (DE)
(72) Erfinder: Klein, Claus-Jürgen, 58332 Schwelm (DE); Tiedtke, Henning, 58256 Ennepetal (DE)
(74) Vertreter: Bungartz Christophersen Partnerschaft mbB Patentanwälte

(56) Entgegenhaltungen:
- EP-A1- 1 354 790
- EP-A2- 0 267 173
- EP-A2- 0 335 427
- ES-U- 1 057 932
- FR-A1- 2 523 906

## Beschreibung

Hauptprofils der Runge, wobei der so seitlich überstehende Bereich der Platte eine Abstützung für die benachbarte Bordwand bildet. Diese Bauweise kann beitragen, das Eindringen von Staub und Feuchtigkeit in das dahinterliegende Fahrzeuginnere zu reduzieren. Das obere Ende des mit der Platte versehenen Profils lässt sich von unten her in eine taschenartige Aufnahme an der Rückseite des Hauptprofils einstecken. Ist dies geschehen, wird durch Druck auf das Hauptprofil dieses mit einem unteren Rungenabschnitt gegen das Profil geschwenkt, und ein Verriegelungsmechanismus sorgt dafür, das Hauptprofil und damit indirekt auch das zusätzliche Profil an der benachbarten Bordwand zu verriegeln. Allerdings ist das zusätzliche Profil an keinem seiner beiden Enden dauerhaft mit dem Hauptprofil oder dem Ladeboden verbunden. Vielmehr ist das zusätzliche Profil ein loses Element, welches im Rahmen der oft hektisch ablaufenden Be- und Entladetätigkeiten auch einmal verlegt werden kann. Daher kann die Schließanordnung nach der EP 0 267 173 A2 hinsichtlich der Bedienungsfreundlichkeit noch nicht voll befriedigen.

Ziel der Erfindung sind Maßnahmen, die bekannte Schließanordnung unter Wahrung des Vorteils, ein Eindringen von Staub und Feuchtigkeit in den Laderaum über die zwischen den Bordwänden angeordneten Rungenabschnitte zu vermeiden, noch bedienungsfreundlicher zu gestalten.

Zur Lösung wird eine Schließanordnung mit den Merkmalen des Patentanspruchs 1 vorgeschlagen.

Von Vorteil bei dieser Lösung ist, dass die Platte weiterhin mit dem Rungenprofil verbunden bleibt, da die Platte an ihrem oberen Rand über ein Gelenk mit der Runge verbunden ist. Dies ermöglicht die Integration der Platte in den Schließ- bzw. Verriegelungsmechanismus der Runge. Die Platte bildet hierbei einen zu dem übrigen Teil der Runge gelenkigen Stützarm, welcher als Teil einer Kniehebelkonstruktion die Verriegelung der Runge an dem fahrzeugfesten Rungenhalter unterstützt.

Die Platte an der Rückseite der Runge ist geeignet, das Eindringen von Staub und Feuchtigkeit in den Laderaum dadurch zu reduzieren, dass die Runge sowie der Rand der jeweils angrenzenden Bordwand an deren Rückseite flächig abgedeckt sind. In diesem Bereich kann daher Staub und Feuchtigkeit nicht durch die Runge hindurch in das Fahrzeuginnere gelangen. Außerdem bildet der seitlich über die Breite der Runge überstehende Bereich der Platte eine Abstützung für den vertikalen Rand der angrenzenden Bordwand. Die Platte nimmt eine doppelte Funktion wahr. Sie bewirkt nicht nur den genannten Verschluss im Bereich zwischen zwei benachbarten Bordwänden, sondern sie bildet zugleich einen Anschlag, gegen den sich die aufgestellten Bordwände mit ihren vertikalen Rändern abstützen können. In dieser Stellung lassen sich die Bordwände dann in geeigneter Weise verriegeln. Vorzugsweise erfolgt eine solche Verriegelung der Bordwand mittels eines Schließteils, welches an der fahrzeugaußen gelegenen Seite der Platte befestigt ist.

Eine Ausgestaltung der erfindungsgemäßen Schließanordnung ist gekennzeichnet durch ein am unteren Rand der Platte angeordnetes Stützlager für die gelenkige Abstützung gegenüber dem Ladeboden. Vorzugsweise ist das Stützlager schwenkbar an einem Gegenlager abgestützt, welches einstückig an einem Rungenhalter ausgebildet ist. Der Rungenhalter ist an dem Ladeboden befestigt, und mit einer Verriegelungsstruktur für das untere Ende der Runge versehen.

Mit einer weiteren Ausgestaltung wird vorgeschlagen, dass das Stützlager, über das sich die Platte gegenüber dem Ladeboden abstützt, zwischen Scharnieren der jeweils benachbarten Bordwände angeordnet ist.

Um zu verhindern dass Feuchtigkeit, welche von der Platte zurückgehalten wird, entlang der Platte nach unten abläuft und auf diese Weise doch in den Laderaum gelangt, ist der untere Rand der Platte vorzugsweise tiefer als die Ladeebene des Ladebodens angeordnet.

Mit einer weiteren Ausgestaltung wird vorgeschlagen, dass die Platte zu beiden Seiten hin über die Breite der Runge übersteht und dort jeweils eine Abstützung für den vertikalen Rand der angrenzenden Bordwand bildet. Vorzugsweise stützt die Platte den vertikalen Rand der angrenzenden Bordwand über dessen gesamte Höhe ab.

Die Erfindung betrifft eine Schließanordnung für einen einen Ladeboden und einen durch vertikale Rungen getragenen Dachrahmen aufweisenden Fahrzeugaufbau, wobei die Rungen nach außen verschwenkbar gestaltet sind und zwischen den Rungen Bordwände angeordnet sind, die an in Höhe des Ladebodens angeordneten Scharnieren angelenkt sind, wobei an der Rückseite der Runge jeweils eine Platte verschwenkbar angeordnet ist, die gelenkig gegenüber dem Ladeboden abgestützt ist und deren Breite die Breite der Runge übersteigt, und wobei der seitlich über die Breite der Runge überstehende Bereich der Platte eine Abstützung für den vertikalen Rand der angrenzenden Bordwand bildet.

Bei einer Schließanordnung, wie sie aus der DE 102 28 982 A1 bekannt ist, besteht deren Runge im Wesentlichen aus einem Profil, welches im Bereich seines unteren Endes an dem Ladeboden des Fahrzeugaufbaus verriegelbar ist. Die Verriegelung erfolgt über zwei ein Kniehebelgelenk bildende Hebel. Das Profil der Runge weist zwei rechteckige Auskragungen sowie, entlang der Seitenränder des Profils, jeweils einen langgestreckten Flansch auf. Die Flansche ermöglichen das Anlegen einer Bordwand gegen die Runge. Zur Befestigung der Bordwand an der Runge können geeignete, in der genannten Veröffentlichung jedoch nicht näher beschriebene Verriegelungsmittel vorgesehen sein.

Von Nachteil bei dieser Schließanordnung sind Durchtritte und Öffnungen in Höhe der Bordwände und insbesondere im Bereich der zwischen den Bordwänden angeordneten Rungenabschnitte. Denn durch die Rungen hindurch kann Staub und Feuchtigkeit in den dahinter angeordneten Laderaum des Fahrzeugaufbaus gelangen. Auch der bei verriegelter Runge darin eingeschwenkte Schließhebel vermag dies nicht zu verhindern, da er Öffnungen freiläßt, und zudem die Rückseite eines Rungenprofils technisch bedingt häufig offen gestaltet ist.

Weitere, ebenfalls nach dem Kniehebelprinzip arbeitende Schließanordnungen sind aus der ES 1 057 932 U und der EP 0 335 427 A2 bekannt.

Eine Schließanordnung mit den eingangs genannten Merkmalen ist aus der EP 0 267 173 A2 bekannt. Die Rungen sind dazu ausgebildet, benachbarte Bordwände zu stützen und zu verriegeln. Zu diesem Zweck befindet sich an der Rückseite des Hauptprofils der Runge ein mit einer zusätzlichen Platte versehenes Profil, welches lösbar gegenüber dem Ladeboden abgestützt ist. Die Breite der an dem Profil befestigten Platte übersteigt die Breite des Schließlich wird mit einer Ausgestaltung der Erfindung vorgeschlagen, dass die Platte mit versteifenden Profilierungen versehen ist, um so die Festigkeit der Platte, insbesondere im Hinblick auf deren zusätzliche Funktion als Anschlag für die angrenzenden Bordwände, zu erhöhen.

Ausführungsbeispiele der Erfindung werden im Folgenden anhand der Zeichnungen erläutert. Darin zeigen:
- Figur 1: in perspektivischer Darstellung eine Schließanordnung für einen Fahrzeugaufbau, bestehend aus einer vom Fahrzeugaufbau lösbaren Runge und einer nach unten abklappbaren Bordwand;
- Figur 2: die Gegenstände der Figur 1 bei geringfügig aufgeklappter Bordwand;
- Figur 3: die Runge in gelöstem Zustand;
- Figur 4: einen vertikalen Schnitt durch den unteren Teil der Runge;
- Figur 4 A: eine vergrößerte Darstellung des Details A der Figur 4;
- Figur 4 B: eine vergrößerte Darstellung des Details B der Figur 4 und
- Figur 5: in einer der Figur 3 entsprechenden Stellung eine zweite Ausführungsform einer erfindungsgemäßen Schließanordnung.

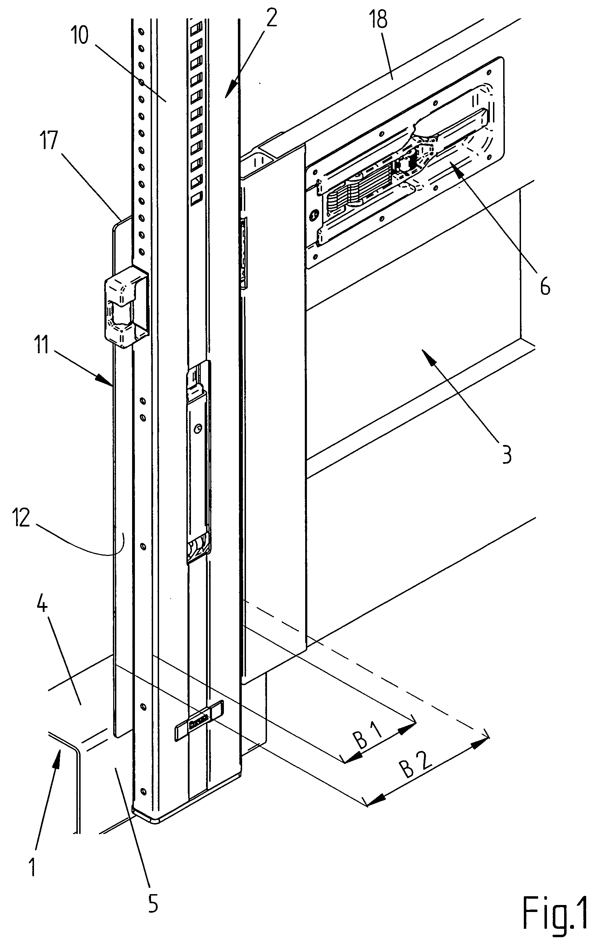

Figur 1 zeigt in perspektivischer Darstellung den Verbindungsbereich zwischen einem Ladeboden 1 eines Fahrzeugaufbaus und einer an dem Ladeboden 1 von außen her befestigbaren, vertikalen Runge 2. Zu jeder Seite der Runge 2 ist jeweils eine nach unten abklappbare Bordwand 3 angeordnet, wobei aus Gründen der Übersicht in Figur 1 nur die rechts von der Runge 2 angeordnete Bordwand 3 dargestellt ist.

Von dem flächigen Ladeboden 1 des Fahrzeugaufbaus ist in Figur 1 nur der Kantenbereich, d.h., der Übergang von der horizontalen Ladeebene 4 des Ladebodens in die dazu rechtwinkelige Außenwand 5 dargestellt. An dieser Außenwand 5 ist ein Rungenhalter 24 befestigt, an dem sich das dargestellte untere Ende der Runge 2 verriegeln lässt.

Nicht dargestellt ist hingegen der obere Bereich der Runge 2. Diese ist Bestandteil einer Trägerkonstruktion für den Dachrahmen des Fahrzeugaufbaus. Von diesem Dachrahmen können z.B. Seitenplanen herunterhängen. Vorzugsweise ist das nicht dargestellte obere Ende der Runge mit Rollen versehen und in einer Schienenanordnung an der oberen seitlichen Kante des Dachrahmens seitwärts verschiebbar. Auf diese Weise lässt sich durch seitliches Verschieben der mehrfach am Fahrzeug vorhandenen Rungen eine zum Be- und Entladen vergrößerte Seitenöffnung schaffen.

Dem Verschließen des Fahrzeugaufbaus dienen ferner die Bordwände 3. Jede Bordwand 3 ist jeweils zwischen zwei der Rungen 2 angeordnet, und z. B. daran verriegelbar. Zu diesem Zweck ist die Bordwand 3 mit einem an sich bekannten Hebelverschluss 6 versehen. Jede Bordwand 3 ist an Scharnieren mit waagerechter Drehachse angelenkt, wobei die Scharniere, ebenso wie die Rungenhalter 24, an der Außenwand 5 des Ladebodens 1 befestigt sind. Auf diese Weise lässt sich jede Bordwand 3 um diese horizontale Achse nach unten herunterklappen, wodurch der Fahrzeugaufbau bis zur Höhe der Ladeebene 4 herunter zu öffnen ist.

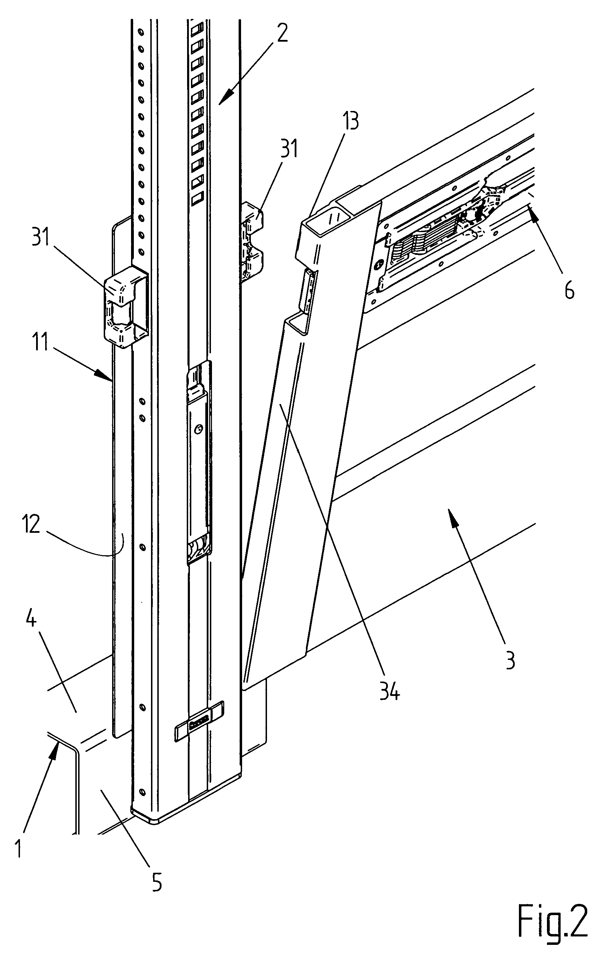

Figur 2 zeigt die Bordwand 3 in leicht geöffneter Stellung. Der Hebelverschluss 6 der Bordwand ist geöffnet, so dass sich die Bordwand nunmehr vollständig abklappen lässt.

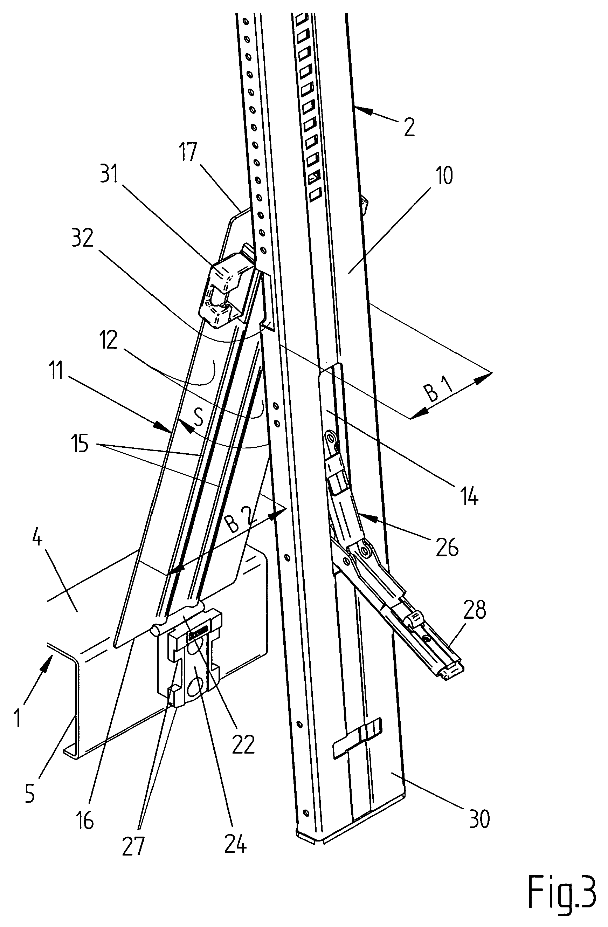

In Figur 3 ist die im Anschluss an das Abklappen der Bordwände mögliche Entriegelung der Runge dargestellt. Die Runge 2 besteht aus einem langgestreckten, geraden Rungenprofil 10. An dessen Rückseite befindet sich ein zusätzlicher Stützarm in Gestalt einer rechteckigen Platte 11.

Die Breite des Profils 10 der Runge 2 beträgt B 1, und die Breite des zusätzlichen Stützarms in Gestalt der Platte 11 beträgt B 2. Entscheidend ist, dass die Breite B 2 größer als die Breite B 1 ist, d.h. die Platte 11 steht seitlich deutlich über die Breite der Runge 2 über. Dies gilt bei der dargestellten Runge, welche zwischen zwei benachbarten Bordwänden angeordnet ist, für beide Seiten, d.h. die Platte 11 steht zu beiden Seiten hin über die im Vergleich geringere Breite B 1 der Runge 2 über. Auf diese Weise befindet sich an der jeweiligen Seite der Runge eine einstückig an der Platte ausgebildete Abstützung 12 (Figuren 1 und 2) für den vertikalen Rand 13 der angrenzenden Bordwand 3. Figur 3 lässt wegen der ausgeschwenkten Stellung der Runge 2 jene vertikalen Randbereiche der Platte 11 erkennen, an denen sich bei verriegelter Runge und geschlossenen Bordwänden deren vertikale Ränder abstützen können.

Der entscheidende Vorteil der Platte 11 ist die erzielte gemeinsame Abdeckung der Rückseite des Rungenprofils 10 einschließlich der angrenzenden vertikalen Randbereiche der jeweiligen Bordwand. Obwohl also die Runge konstruktionsbedingt mit Öffnungen, wie z.B. der Öffnung 14 (Figur 3), versehen ist, verhindert die hinter der Runge angeordnete, insgesamt geschlossene Platte 11 ein Hindurchtreten von Schmutz, Staub oder Spritzwasser durch die Runge hindurch in den dahinter angeordneten Laderaum des Fahrzeugs. Die so erreichte Abdeckung zum Laderaum hin ist dadurch besonders effektiv, als die Breite B 2 der Platte 11 bis über den vertikalen Rand der angrenzenden Bordwand 3 hinaus reicht, und somit auch noch die Bordwand an deren Rückseite zum Teil abdeckt. Damit ist jeglichem Schmutz oder auch Spritzwasser ein direkter Weg durch die Runge hindurch in den Laderaum verwehrt. Die Gefahr von Schäden an den dort gelagerten Waren, etwa Feuchteschäden, wird auf diese Weise reduziert.

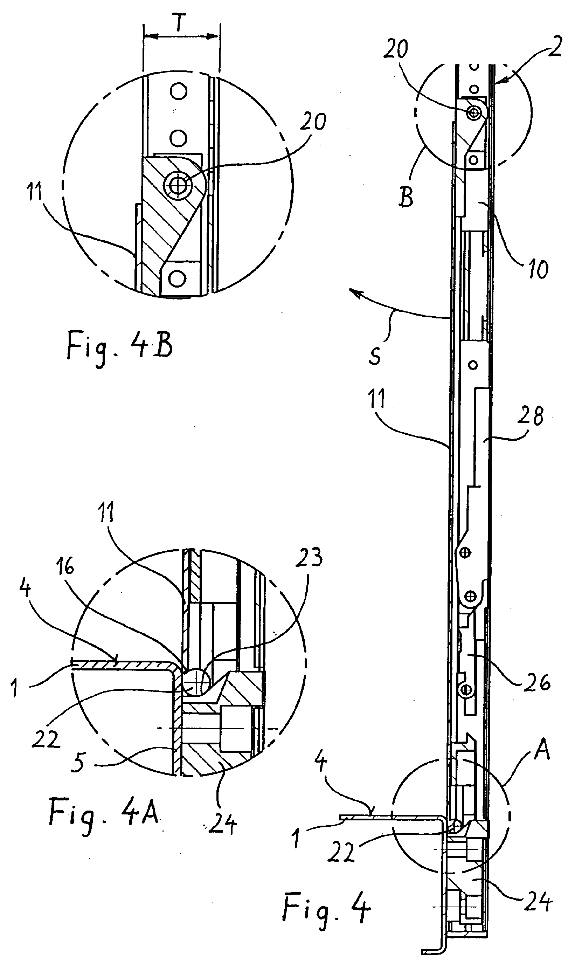

Die Platte 11 ist im Wesentlichen rechteckig. Sie kann zur Versteifung mit Sicken oder anderen Profilierungen 15 auf einer oder auf beiden Seiten versehen sein. Damit durch die Runge hindurchgelangtes und sich auf der Außenseite der Platte 11 ansammelndes Wasser nicht auf die Ladeebene 4 herunterrinnt, ist, wie Figur 4 A erkennen lässt, der untere Rand 16 der Platte 11 tiefer angeordnet, als die Ladeebene 4 des Ladebodens 1. An der Platte 11 herablaufendes Wasser gelangt daher sogleich auf die vertikale Außenwand 5 des Ladebodens 1. Von Vorteil ist ferner, dass sich die rechteckige Platte 11 mit ihrem oberen Rand 17 in etwa bis auf Höhe des oberen Randes 18 (Figur 1) der Bordwand 3 erstreckt.

Gemäß den Figuren 4, 4A und 4B ist die Platte 11, damit sie zugleich die Funktion eines Stützarms für die Runge 2 ausübt, unlösbar mit dem langgestreckten Rungenprofil 10 verbunden. Diese unlösbare, aber gelenkige Verbindung besteht in einem am oberen Rand 17 der Platte ausgebildeten Scharnier oder Gelenk 20 mit waagerechter Schwenkachse. Die Schwenkachse ist in Bezug auf die Tiefe T der Runge 2 mittig angeordnet, wie Figur 4B erkennen lässt. Das Gelenk 20 ermöglicht eine Schwenkbarkeit der Platte 11 in Bezug auf die Runge 2 gemäß dem in Figur 3 und Figur 4 eingezeichneten Schwenkpfeil S.

Auch das untere Ende der Platte 11 ist Bestandteil eines Gelenks, jedoch handelt es sich insoweit um ein lösbares Gelenk. Zu diesem Zweck ist die Platte 11 in Höhe ihres unteren Randes 16 mit einem Stützlager 22 in Gestalt einer teilzylindrischen Schalenkontur versehen. Ein korrespondierendes Gegenlager 23 ist einstückig an dem Rungenhalter 24 ausgebildet, der an der Außenwand 5 des Ladebodens 1 befestigt ist und außerdem mit einer Verriegelungsstruktur für das untere Ende der Runge 2 versehen ist. Das Gegenlager 23 kann ebenfalls eine Schalenkontur sein, welche dann der korrespondierenden Schalenstruktur an der Platte entspricht. Entscheidend ist, dass sich das Stützlager 22 um eine waagerechte Achse schwenkbar an dem Gegenlager 23 abstützt, ohne dass Stützlager 22 und Gegenlager 23 miteinander verbunden sind. Vielmehr lässt sich das an der Platte 11 angeformte Stützlager 22 aus dem Gegenlager 23 herausnehmen und darin wieder einsetzen. Dies ist Voraussetzung, damit die entriegelte Runge zum Zwecke der Vergrößerung der Ladeöffnung seitlich verschoben werden kann, wobei die Platte 11 über das Gelenk 20 weiterhin mit dem Rungenprofil 10 verbunden bleibt.

Die Runge 2 und insbesondere deren Rungenprofil 10 reicht, ohne irgendwelche Gelenk- oder Knickstellen, bis zur Höhe des Ladebodens 1 herab. Dort, an dem Rungenhalter 24, erfolgt die Verriegelung des unteren Endes 30 der Runge mittels eines in das Rungenprofil 10 eingesetzten Verriegelungsmechanismus 26. Dieser ist in der Weise gestaltet, dass bei an der Bordwand 3 anliegender Runge eine Blockierung hinter Verriegelungsstrukturen 27 erfolgt, die an dem Rungenhalter 24 angeformt sind. Zur Betätigung des Verriegelungsmechanismus 26 dient eine Hebelanordnung mit einem an der Runge 2 verschwenkbar gelagerten Schließhebel 28.

Figur 3 zeigt die entriegelte Runge 2. Deren unteres Ende 30 nimmt, seitlich abgestützt durch die auf dem Rungenlager 24 abgestützte Platte 11, eine gegenüber dem Ladeboden 1 leicht ausgeschwenkte Position ein. Wird dann die Runge 2 nach innen, zum Fahrzeugaufbau hin gedrückt, erfolgt zugleich ein leichtes Anheben der gesamten Runge 2 infolge der Hebelwirkung der als Stützarm wirkenden Platte 11. Das Heranschwenken der Runge 2 ist beendet, sobald deren unteres Ende 30 gegen den Ladeboden 1 bzw. gegen den dort angebrachten Rungenhalter 24 stößt. Zugleich erstrecken sich Rungenprofil 10 und Platte 11 dann parallel zueinander oder liegen aneinander an. In dieser Schließstellung lässt sich durch Einschwenken des Schließhebels 28 die Runge an dem Rungenhalter 24 verriegeln. Sodann wird die angrenzende Bordwand 3 nach oben geschwenkt und ihr Hebelverschluss 6 an einem Schließteil 31 verriegelt. Bei der Ausführungsform nach den Figuren 1 bis 3 ist dieses Schließteil 31 an der fahrzeugaußen gelegenen Seite der Platte 11 befestigt. Ein Teil des Körpers des Schließteils 31 gelangt hierbei in eine an der Rückseite des Rungenprofils 10 vorgesehene Ausnehmung 32.

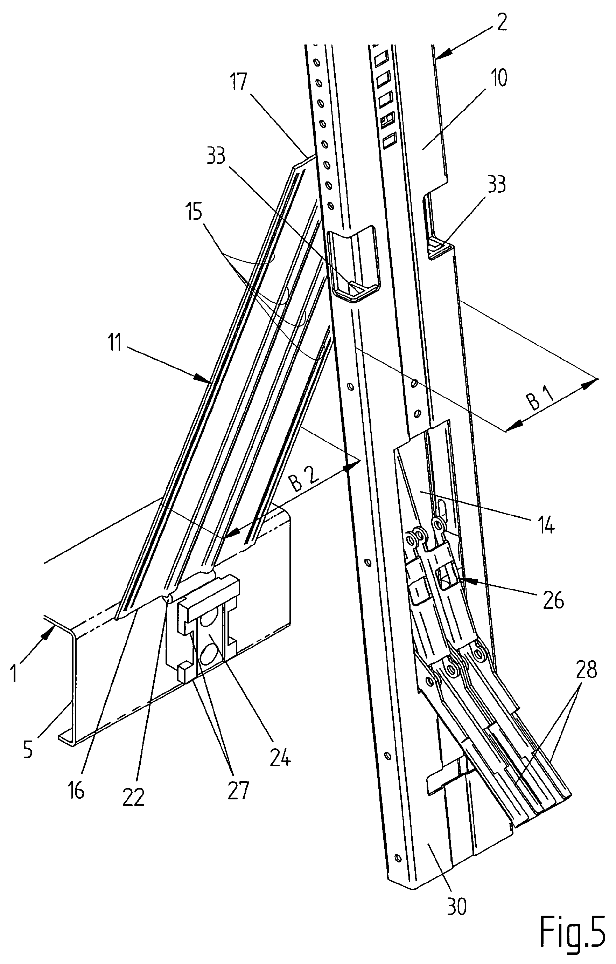

Bei der Ausführungsform nach Figur 5 hingegen befindet sich das Schließteil an der Stirnseite 34 (Figur 1) der Bordwand 3. Der Hebelverschluß für die Bordwand ist hier in die Runge 2 integriert. Das an der Bordwand angeordnete Schließteil ragt im geschlossenen Zustand in die Ausnehmung 33 der Runge 2 und wird mittels des Verriegelungsmechanismus 26 mit derselben verbunden.

### Bezugszeichenliste

- 1: Ladeboden
- 2: Runge
- 3: Bordwand
- 4: Ladeebene
- 5: Außenwand des Ladebodens
- 6: Hebelverschluss
- 10: Rungenprofil
- 11: Platte, Stützarm
- 12: Abstützung
- 13: Rand
- 14: Öffnung
- 15: Profilierung
- 16: unterer Rand
- 17: oberer Rand
- 18: oberer Rand
- 20: Gelenk
- 22: Stützlager
- 23: Gegenlager
- 24: Rungenhalter
- 26: Verriegelungsmechanismus
- 27: Verriegelungsstruktur
- 28: Schließhebel
- 30: unteres Ende der Runge
- 31: Schließteil
- 32: Ausnehmung
- 33: Ausnehmung
- 34: Stirnseite der Bordwand
- B 1: Breite
- B 2: Breite
- S: Schwenkpfeil
- T: Tiefe

## Patentansprüche

1. Schließanordnung für einen einen Ladeboden und einen durch vertikale Rungen (2) getragenen Dachrahmen aufweisenden Fahrzeugaufbau, wobei die Rungen (2) nach außen verschwenkbar gestaltet sind und zwischen den Rungen (2) Bordwände (3) angeordnet sind, die an in Höhe des Ladebodens (1) angeordneten Scharnieren angelenkt sind, wobei an der Rückseite der Runge (2) jeweils eine Platte (11) verschwenkbar angeordnet ist, die gelenkig gegenüber dem Ladeboden (1) abgestützt ist und deren Breite (B2) die Breite (B1) der Runge (2) übersteigt, und wobei der seitlich über die Breite (B1) der Runge (2) überstehende Bereich der Platte (11) eine Abstützung (12) für den vertikalen Rand (13) der angrenzenden Bordwand (3) bildet, **dadurch gekennzeichnet, dass** die Platte (11) an ihrem oberen Rand (17) über ein Gelenk (20) unlösbar mit der Runge (2) verbunden ist, und zur Verriegelung der Runge (2) das untere Ende (30) der Runge (2) in Höhe des Ladebodens (1) an einem dort befestigten Rungenhalter (24) verriegelbar ist.

2. Schließanordnung nach Anspruch 1,
**gekennzeichnet durch**
ein am unteren Rand (16) der Platte (11) angeordnetes Stützlager (22) für die gelenkige Abstützung gegenüber dem Ladeboden (1).

3. Schließanordnung nach Anspruch 2,
**dadurch gekennzeichnet,**
**dass** das Stützlager (22) lösbar gegen ein in Höhe des Ladebodens (1) angeordnetes Gegenlager (23) abgestützt ist.

4. Schließanordnung nach Anspruch 2 oder 3,
**dadurch gekennzeichnet,**
**dass** das Stützlager (22) zwischen Scharnieren der jeweils benachbarten Bordwände (3) angeordnet ist.

5. Schließanordnung nach Anspruch 3,
**dadurch gekennzeichnet,**
**dass** das Gegenlager (23) an dem Rungenhalter (24) ausgebildet ist.

6. Schließanordnung nach einem der vorangehenden Ansprüche,
**dadurch gekennzeichnet,**
**dass** der untere Rand (16) der Platte (11) tiefer als die Ladeebene (4) des Ladebodens (1) angeordnet ist.

7. Schließanordnung nach Anspruch 1,
**dadurch gekennzeichnet,**
**dass** die Drehachse des Gelenks (20) mittig in Bezug auf die Tiefe (T) der Runge (2) angeordnet ist.

8. Schließanordnung nach Anspruch 1,
**dadurch gekennzeichnet,**
**dass** die Platte (11) zu beiden Seiten hin über die Breite (B 1) der Runge übersteht und dort jeweils eine Abstützung (12) für den vertikalen Rand (13) der angrenzenden Bordwand (3) bildet.

9. Schließanordnung nach Anspruch 1,
**dadurch gekennzeichnet,**
**dass** sich die Platte (11) über die Höhe der Bordwand (3) erstreckt.

10. Schließanordnung nach einem der vorangehenden Ansprüche,
**dadurch gekennzeichnet,**
**dass** die Platte (11) mit versteifenden Profilierungen (15) versehen ist, vorzugsweise mit Sicken.

11. Schließanordnung nach einem der Ansprüche 1 bis 10,
**gekennzeichnet durch**
ein an der fahrzeugaußen gelegenen Seite der Platte (11) befestigtes Schließteil (31), an dem die angrenzende Bordwand (3) verriegelbar ist.

12. Schließanordnung nach einem der Ansprüche 1 bis 10,
**gekennzeichnet durch**
ein an der Runge (2) befestigtes Schließteil (31), an dem die angrenzende der Bordwand (3) verriegelbar ist.

## Claims

1. Locking mechanism for a vehicle superstructure having a loading floor and a roof frame borne by vertical stanchions (2), wherein the stanchions (2) are configured such as to be able to be pivoted outwards and arranged between the stanchions (2) are side walls (3) which are articulated on hinges arranged at the level of the loading floor (1), wherein in each case a panel (11) is pivotably arranged on the rear side of the stanchion (2), which panel is supported in an articulated manner relative to the loading floor (1) and the width (B2) of which panel exceeds the width (B1) of the stanchion (2), and wherein the region of the panel (11) projecting laterally beyond the width (B1) of the stanchion (2) forms a support (12) for the vertical edge (13) of the adjoining side wall (3), **characterized in that** the panel (11), at its top edge (17), is non-releasably connected to the stanchion (2) via an articulation (20) and, in order to lock the stanchion (2), the lower end (30) of the stanchion (2) can be locked at the level of the loading floor (1) to a stanchion holder (24) which is fastened there.

2. Locking mechanism according to claim 1, **characterized by** a supporting bearing (22) for the articulated support relative to the loading floor (1), said supporting bearing being arranged at the bottom edge (16) of the panel (11).

3. Locking mechanism according to claim 2, **characterized in that** the supporting bearing (22) is releasably supported against a counter-bearing (23) which is arranged at the level of the loading floor (1).

4. Locking mechanism according to claim 2 or 3, **characterized in that** the supporting bearing (22) is arranged between hinges of the respectively adjacent side walls (3).

5. Locking mechanism according to claim 3, **characterized in that** the counter-bearing (23) is formed on the stanchion holder (24).

6. Locking mechanism according to any one of the preceding claims, **characterized in that** the bottom edge (16) of the panel (11) is arranged lower than the loading plane (4) of the loading floor (1).

7. Locking mechanism according to claim 1, **characterized in that** the axis of rotation of the articulation (20) is arranged centrally in relation to the depth (T) of the stanchion (2).

8. Locking mechanism according to claim 1, **characterized in that** the panel (11) projects on both sides beyond the width (B1) of the stanchion and forms there in each case a support (12) for the vertical edge (13) of the adjoining side wall (3).

9. Locking mechanism according to claim 1, **characterized in that** the panel (11) extends beyond the height of the side wall (3).

10. Locking mechanism according to any one of the preceding claims, **characterized in that** the panel (11) is provided with stiffening profiles (15), preferably with beads.

11. Locking mechanism according to any one of claims 1 to 10, **characterized by** a locking part (31) which is fastened to the side of the panel (11) facing towards the outside of the vehicle and to which the adjoining side wall (3) can be locked.

12. Locking mechanism according to any one of claims 1 to 10, **characterized by** a locking part (31) which is fastened to the stanchion (2) and to which the adjoining side wall (3) can be locked.

## Revendications

1. Mécanisme de fermeture pour une caisse de véhicule présentant un fond de chargement et un cadre de toit porté par des montants verticaux (2), les montants (2) étant configurés de manière à pouvoir pivoter vers l'extérieur et des parois de bord (3) étant disposées entre les montants (2), lesquelles sont articulées au niveau de charnières disposées à la hauteur du fond de chargement (1), une plaque (11) étant à chaque fois disposée de manière à pouvoir pivoter au niveau du côté arrière du montant (2), laquelle est supportée de manière articulée par rapport au fond de chargement (1) et dont la largeur (B2) dépasse la largeur (B1) du montant (2), et la région de la plaque (11) dépassant latéralement au-delà de la largeur (B1) du montant (2) formant un support (12) pour le bord vertical (13) de la paroi de bord adjacente (3),
**caractérisé en ce que** la plaque (11) est connectée au niveau de son bord supérieur (17) par le biais d'une articulation (20) de manière imperdable au montant (2), et pour le verrouillage du montant (2), l'extrémité inférieure (30) du montant (2) peut être verrouillée à la hauteur du fond de chargement (1) à un support de montant (24) fixé à cet endroit.

2. Mécanisme de fermeture selon la revendication 1,
**caractérisé par**
un palier de support (22) disposé au niveau du bord inférieur (16) de la plaque (11) pour le support articulé par rapport au fond de chargement (1).

3. Mécanisme de fermeture selon la revendication 2,
**caractérisé en ce que**
le palier de support (22) est supporté de manière amovible contre un palier conjugué (23) disposé à la hauteur du fond de chargement (1).

4. Mécanisme de fermeture selon la revendication 2 ou 3,
**caractérisé en ce que**
le palier de support (22) est disposé entre des charnières des parois de bord adjacentes respectives (3).

5. Mécanisme de fermeture selon la revendication 3,
**caractérisé en ce que**
le palier conjugué (23) est réalisé au niveau du support de montant (24).

6. Mécanisme de fermeture selon l'une quelconque des revendications précédentes,
**caractérisé en ce que**
le bord inférieur (16) de la plaque (11) est disposé plus bas que le plan de chargement (4) du fond de chargement (1).

7. Mécanisme de fermeture selon la revendication 1,
**caractérisé en ce que**
l'axe de rotation de l'articulation (20) est disposé centralement par rapport à la profondeur (T) du montant (2).

8. Mécanisme de fermeture selon la revendication 1,
**caractérisé en ce que**
la plaque (11) dépasse des deux côtés au-delà de la largeur (B1) du montant et forme à cet endroit à chaque fois un support (12) pour le bord vertical (13) de la paroi de bord adjacente (3).

9. Mécanisme de fermeture selon la revendication 1,
**caractérisé en ce que**
la plaque (11) s'étend sur la hauteur de la paroi de bord (3).

10. Mécanisme de fermeture selon l'une des revendications précédentes,
**caractérisé en ce que**
la plaque (11) est pourvue de profilages de renforcement (15), de préférence de moulures.

11. Mécanisme de fermeture selon l'une quelconque des revendications 1 à 10,
**caractérisé par**
une partie de fermeture (31) fixée au côté de la plaque (11) situé à l'extérieur du véhicule, à laquelle peut être verrouillée la paroi de bord adjacente (3).

12. Mécanisme de fermeture selon l'une quelconque des revendications 1 à 10,
**caractérisé par**
une partie de fermeture (31) fixée au montant (2), à laquelle peut être verrouillée la paroi de bord adjacente (3).
